Europäisches Patentamt

European Patent Office

Office européen des brevets

(11) Publication number: **0 435 182 B1**

# EUROPEAN PATENT SPECIFICATION

(45) Date of publication of patent specification: **13.07.94**  (51) Int. Cl.5: **F03B 15/14**

(21) Application number: **90125062.1**

(22) Date of filing: **21.12.90**

(54) **Control system for high-efficiency operation of generating units in hydroelectric power stations.**

(30) Priority: **21.12.89 JP 329503/89**

(43) Date of publication of application:
**03.07.91 Bulletin 91/27**

(45) Publication of the grant of the patent:
**13.07.94 Bulletin 94/28**

(84) Designated Contracting States:
**CH DE FR LI SE**

(56) References cited:
**US-A- 4 467 216**
**US-A- 4 496 845**

**PATENT ABSTRACTS OF JAPAN, vol.2, no.
220 (M-330)[1657], 6th October 1984;& JP-
A-59 103 972 (MEIDENSHA K.K.) 15-06-1984**

(73) Proprietor: **KABUSHIKI KAISHA TOSHIBA
72, Horikawa-cho
Saiwai-ku
Kawasaki-shi Kanagawa-ken 210(JP)**

(72) Inventor: **Noguchi, Tetsuya
2-702, 3-1-9, Shirahata
Urawa-Shi, Saitama-Ken(JP)**

(74) Representative: **Liesegang, Roland, Dr.-Ing. et
al
FORRESTER & BOEHMERT
Franz-Joseph-Strasse 38
D-80801 München (DE)**

## Description

The present invention relates to control systems for high-efficiency operation of a plural number of generating units according to the first part of claim 1 (US-A-4 467 216). The invention is especially directed to control systems for hydroelectric power stations that can efficiently operate generating units using the correlation between the amount and capacity of a storage reservoir and the control elements.

In hydroelectric power stations that take an inflow amount from upstream via an intake gate and turbines of upstream power stations, the inflow water an occasion for being used as waterworks water and agricultural water taken downstream from the generating units, and a single generating unit of small capacity for utilization water when it is necessary to maintain discharge to ensure a constant amount of water for generating units. In this occasion a plural number of normal capacity generating units are provided .

The normal capacity generating units are used to generate power when there is normal operation for a relatively large amount of water, and the small capacity generating units are used in winter and periods of abnormal drought when it is difficult to ensure the discharge of a constant amount of water.

It is possible to use the normal capacity generating units to generate power even when there is a small amount of water but when there is operation at light load, there is a remarkable deterioration of the efficiency, there is an increase in the vibration, and continuous operation is not desirable.

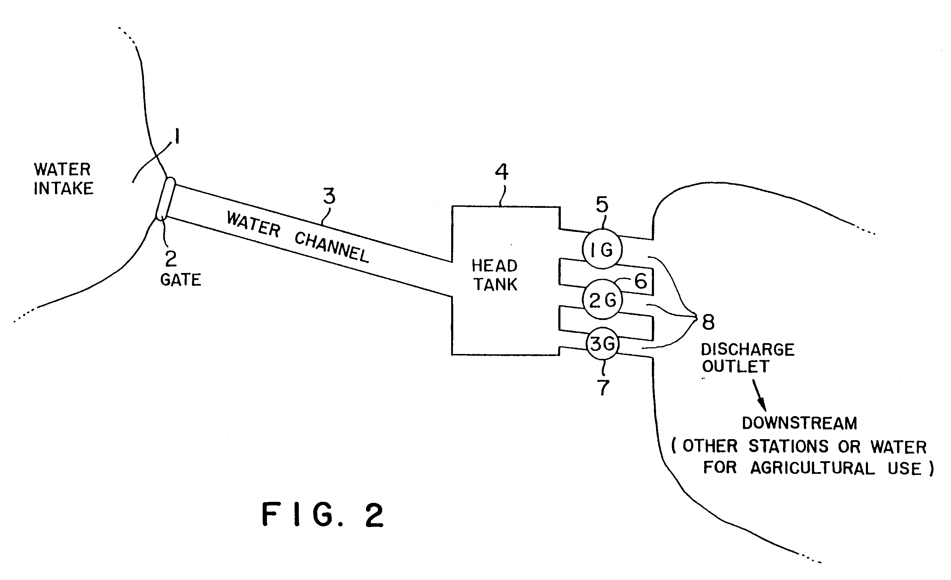

FIG. 2 shows one example of a water system of such a hydroelectric power station.

The water from the water intake 1 has its intake flow adjusted by a gate 2 and is taken in, to flow into a head tank or serge tank 4 via a water channel 3. The water that is stored in the head tank 4 is discharged to the discharge outlet 8 after it has passed through the turbines of the first through third generating units 5, 6 and 7 and been used to generate power, and is then guided to downstream hydroelectric power stations and for direct usage.

Here, the first and second generating units 5 and 6 are of regular capacity and the third generating unit 7 is of small capacity.

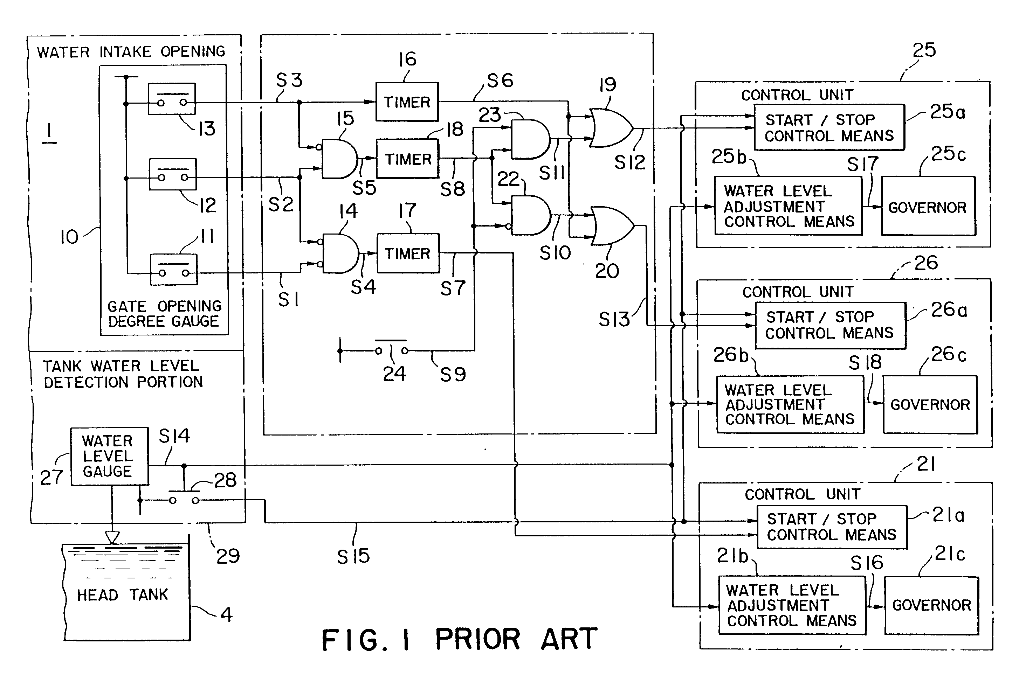

In general, the capacity of the head tank 4 is not large and so there is only response control in which the water level in the head tank 4 is used as the basis to perform start and stop of the generating units 5, 6 and 7. However, with response control, it is difficult to perform start and stop operation and maintain a stable water level and because of this it has been conventional practise to perform response control into which the upstream conditions have been incorporated. FIG. 1 shows a conventional control system for this purpose. This system is basically configured from a calculation unit 9 and control units 21, 25 and 26.

The gate degree of opening gauge 10 is for the detection of the degree of opening of a gate 2 provided at the water intake 1, and is provided with a contact 11 that turns on when the gate 2 is in the fully closed status, a contact 12 that turns on when the degree of opening of the gate 2 is more than a rated value $A_1$ corresponding to the maximum flow amount of the generating unit 7, and a contact 13 that turns on when the degree of opening of the gate 2 is a rated value $A_2$ corresponding to the maximum flow amount of one of the generating unit 5 and the generating unit 6. Here, the rated value $A_2$ is greater than the rated value $A_1$.

The signal $S_1$ from the contact 11 is inverted and applied to one of the input terminals of the AND circuit 14, the signal $S_2$ from the contact 12 is inverted and applied to the other of the input terminals of the AND circuit 14 and is also applied to one of the input terminals of the AND gate 15. The signal $S_3$ from the contact 13 is inverted and applied to the other of the input terminals of the AND circuit 15 and in the status where it is not inverted, is also applied to a trigger input terminal of the timer 16.

The output signal $S_4$ from the AND circuit 14 is applied to the trigger input terminal of a timer 17 and the output signal $S_5$ from the AND circuit 15 is applied to the trigger input terminal of a timer 18.

When the signal $S_3$ is applied to the trigger input terminal, the timer 16 outputs the signal $S_6$ after a certain amount of time has elapsed from when the degree of opening of the gate 2 changes until the time that the flow amount to the head tank 4 changes. This output signal $S_6$ is applied to the input terminals of the OR circuits 19 and 20.

When the signal $S_4$ is applied to the trigger input terminal, the timer 17 outputs the signal $S_7$ after a certain amount of time corresponding to the sum of water arrival/reduction time and the time required to change the degree of opening of the gate 2 from the fully closed position to the rated value $A_1$, and this output signal $S_7$ is applied to the start/stop processing means of the control unit 21 so as to control the generating unit 7.

When the signal $S_5$ is applied to the trigger input terminal, the timer 18 outputs a signal $S_8$ after the lapse of a certain time corresponding to the sum of water arrival/reduction time and the time required to change the degree of opening of the gate 2 from the rated value $A_1$ to the rated value $A_2$, and this output signal $S_8$ is applied to one of the input terminals of the AND circuit 22 and the AND circuit 23.

The contact 24 is turned on to generate a signal $S_9$ and operate generating unit 5 when this generating unit 5 is to be given priority of operation over generating unit 6, and this signal $S_9$ is inverted and applied to the other of the input terminals of the AND circuit 22.

The output signal $S_{10}$ of the AND circuit 22 is applied to the other of the input terminals of the OR circuit 20, and the output signal $S_{11}$ of the AND circuit 23 is applied to the other input terminal of the OR circuit 19.

The output signal $S_{12}$ of the OR circuit 19 is applied to the start/stop control means 25a of the control apparatus 25 in order to control the generating unit 5, and the output signal $S_{13}$ of the OR circuit 20 is applied to the start/stop control means 26a in order to control the generating unit 6.

The water level gauge 27 is to detect the water level of the head tank 4, and its detection signal $S_{14}$ is respectively applied to the water level adjustment control means 21b, 25b, 26b of the control units 21, 25 and 26. In addition, the contact 28 is to turn on when the selection signal $S_{14}$ is smaller than a rated value, and its signal $S_{15}$ is respectively applied to the start/stop control means 21a, 25a, 26a of the control units 21, 25 and 26. The head tank water level detection portion 29 is connected to water level gauge 27 by a contact 28.

The water level adjustment control means 21b, 25b and 26b judge the head tank water level on the basis of the detection signals $S_{13}$, and controls the output of the generating units 7, 5 and 6, and those control signals $S_{16}$, $S_{17}$ and $S_{18}$ control the load limit values of the governors 21c, 25c and 26c of the generating units 7, 5 and 6.

By the configuration described above, the operation will be described when the gate 2 is opened from the fully closed status to the fully open status. The contact 11 turns ON, and the contacts 12 and 13 turn OFF for the status where the gate 2 is fully closed, and all of the contacts 11, 12 and 13 are OFF when the gate starts to open, contact 12 turns ON when the degree of opening of the gate 2 is a rated value $A_1$ or more, and the contact 11 turns ON and contacts 12 and 13 turn ON when the degree of opening is the rated value $A_2$ or more.

Accordingly, in the status where the gate 2 is fully closed, the signal $S_1$ provides ON output and the signals $S_2$ and $S_3$ provide OFF output and so the signals $S_4$ and $S_5$ output from the AND circuits 14 and 15 are OFF. By this, the signals $S_6$, $S_7$ and $S_8$ are not output from the timers 16, 17 and 18 and so the control apparatus 21, 25 and 26 do not start.

When the gate 2 starts to open, then the signals $S_1$, $S_2$ and $S_3$ are all OFF until the time when the degree of opening becomes the rated value $A_1$,

and this causes the signal $S_4$ to be ON and so this signal is applied to the control apparatus 21 at the point when a time set for the timer 17 has elapsed from the timing of when the signal $S_4$ rose to ON output. With this, the generating unit 7 is started in phase with the timing at which the gate 2 starts to open, and the water that flows in from the water intake 1 reaches the head tank 4.

When the degree of opening of the gate 2 changes from the rated value $A_1$ to the rated value $A_2$, the signal $S_1$ is OFF output and the signals $S_2$ and $S_3$ are ON output so that the signal $S_5$ is made ON output, and the signal $S_8$ becomes ON output at the time when a set time of the timer 18 has elapsed from the timing at which the signal $S_5$ became ON output and rose. At this timing, when the contact 24 is ON and the signal $S_9$ is ON output, the AND circuit 23 is in a status where it can be operated and so the signal $S_{11}$ is ON output. Accordingly, in this case, the signal $S_{12}$ is ON output and is applied to the control unit 25. The first generating unit 5 is started by this.

When the degree of opening of the gate 2 is the rated value $A_2$ or greater, then the signal $S_1$ is OFF output and the signals $S_2$ and $S_3$ are ON output so that the signal $S_6$ turns ON after the elapse of a time set for the timer 16, from the timing of the rise of the signal $S_3$ to ON output. By this, the signals $S_{12}$ and $S_{13}$ are ON output and so the second generating unit 6 is started after starting the first generating unit 5.

By this, the generating units 5, 6 and 7 are suitably controlled in accordance with the degree of opening of the gate 2. In addition, after the output of the started generating units 5, 6 and 7 has been included into the power system, the water level adjustment control means 21b, 25b and 26b performs respective load control of the governors 21c, 25c and 26c of the generating units 7, 5 and 6.

In addition, when the water drops to lower than the rated value and the contact 28 turns ON and the signal $S_{15}$ becomes ON output, the start/stop control means 21a, 25a and 26a of the control units 21, 25 and 26 stops the generating units 7, 5 and 6.

However, there is the following problem with such a conventional apparatus.

Firstly, the flow amount from the gate 2 is regulated by the degree of opening when there is a constant water level and so when the water level at the water intake 1 changes, the actual flow amount and the flow amount anticipated by the degree of opening of the gate are not in agreement, and as a result there occurs overflows and unnecessary change in the water level of the head tank, and there is the unwanted consequence of the trip of the generating unit due to the drop in the water level.

Secondly, there is also the unwanted consequence of the operating efficiency of the power station not being very high.

For example, if the flow amount from the water intake 1 is made Qi, the maximum flow amount of the large capacity first and second generating units is made Q1m, Q2m (= Q1m), and the maximum flow of the small capacity third generating unit is made Q3m, then there is the best efficiency when

$$Q1m < Qi \leq (Q1m + Q3m)$$

either one of the generating units 5 and 6 is operated at its maximum flow Q1m (Q2m) and the generating unit 7 is operated by the flow (Qi-Q1m). However, in this case, in the conventional apparatus described above, the two generating units 5 and 6 are respectively operating at their flow (Qi/2) and so the generating efficiency of the entire power station deteriorates.

Finally, when only the generating unit 7 is operating because there is a small flow, the operating life of the generating units 5 and 6 will be reduced because their operating ratio is increased, and the working efficiency of the generating unit 7 will lower and produce the unwanted consequence of a reduced return on the investment.

US-4 476 716 discloses a control system for a hydroelectric power station comprising several generating units supplied with water from a flow hydropower source, which comprises means for detecting the individual flow to each generating unit, flow control means for interrupting flow to individual generating units, means for detecting the efficiency of the generating units and control logic means for interrupting flow to generating units operating below the rated efficiency.

In the light of the problems described above for the conventional apparatus, the present invention has as object the provision of a control apparatus for a hydroelectric power station which can improve the efficiency of the entire power station, average the operating ratio of each of the generating units, lengthen the life of the equipment, improve the economy and realize stable operation of the water level in a head tank. This object is accomplished by a control system according to claim 1.

The present invention is provided with an intake flow calculation means to calculate the flow amount to the water storage reservoir, and a flow distribution means to use the calculation results of the intake flow calculation means to calculate the flow that is to be distributed to each of the generating units so that the total output is maximized.

Accordingly, it is possible to accurately detect the flow amount to the water storage reservoir and so it is possible to control oscillation of the water level and overflows in the head tank and at the same time prevent trip. In addition, each of the items of equipment is suitable combined and so the efficiency of the power station becomes more favorable and the life of the generating units and other equipment is lengthened.

BRIEF DESCRIPTION OF THE DRAWINGS

In the appended drawings:
FIG. 1 is a block diagram showing a conventional hydroelectric power station power generating unit operation control system;
FIG. 2 is an outline view of a general water intake system in a hydroelectric power plant;
FIG. 3 is a block diagram showing a power generating unit high efficiency operation control system for a hydroelectric power station, according to a first embodiment of the present invention;
FIG. 4 is a block diagram of a high-efficiency operation selection processing means in a control system of the first embodiment;
FIG. 5 is a flowchart for describing the generating unit high-efficiency operation selection processing means in a control system of the first embodiment of the present invention; and
FIG. 6 is a block diagram of a generating unit high-efficiency operation selection processing means in a control system of the second embodiment of the present invention.

DETAILED DESCRIPTION OF THE PREFERRED EMBODIMENTS

The following is a detailed description of preferred embodiments of the present invention, with reference to the appended drawings.

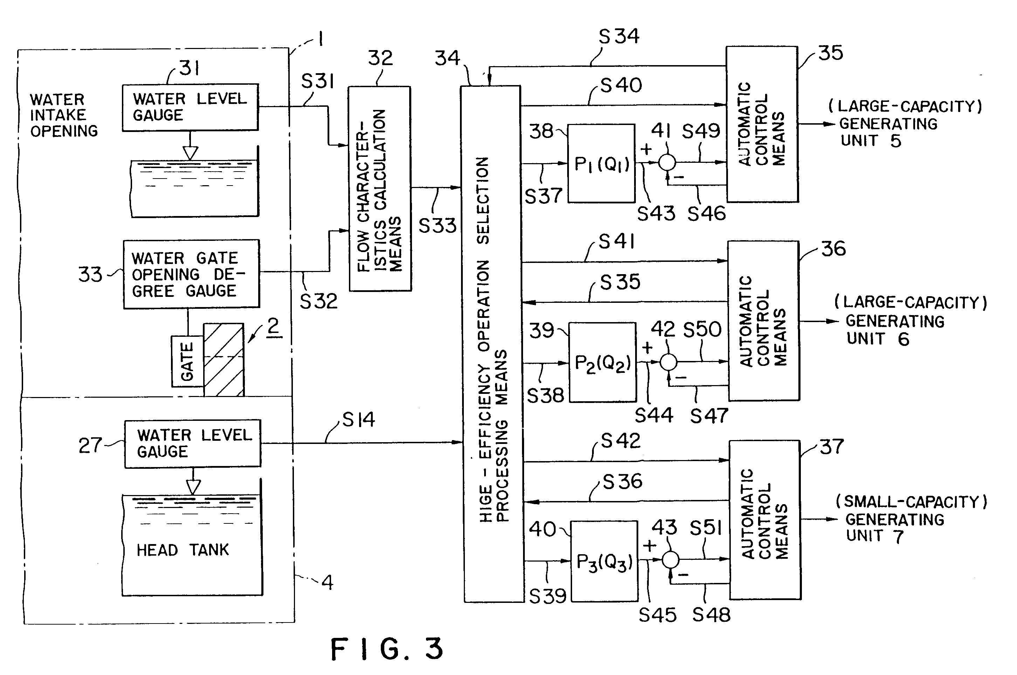

FIG. 3 shows a control apparatus for a hydroelectric power station, and according to a first embodiment of the present invention. Moreover, this control apparatus is applied to the hydroelectric power station having the water system shown in FIG. 2 and portions that are the same or equivalent to similar portions in FIG. 1 and FIG. 2 are indicated with the same numerals.

The control system of the first embodiment is provided with a water level gauge 31 provided to the water intake 1, a gate degree of opening gauge 33, a flow characteristic calculation means 32 that supplies the measurement values of these instruments 31 and 33, and a water level gauge 27 provided to the head tank 4 in the same manner as the conventional embodiment. The control system is configured from a high-efficiency operation selection processing means 34 that controls the operation of the generating units 5, 6 and 7 on the basis of the signals $S_{14}$ and $S_{33}$ output from the water level gauge 27 and the calculation means 32 so that the operation of the generating units 5, 6 and 7 is the most efficient, the automatic control means 35, 36 and 37 that control the generating units 5, 6 and 7, and the objective value calculation means 38, 39 and 40 provided between the automatic control means 35, 36 and 37 and said processing means 34 so as to calculate the power objective values of the generating units 5, 6 and 7. In addition, deviation calculators 41, 42 and 43 are provided between the automatic control means 35, 36 and 37 and the processing means 34.

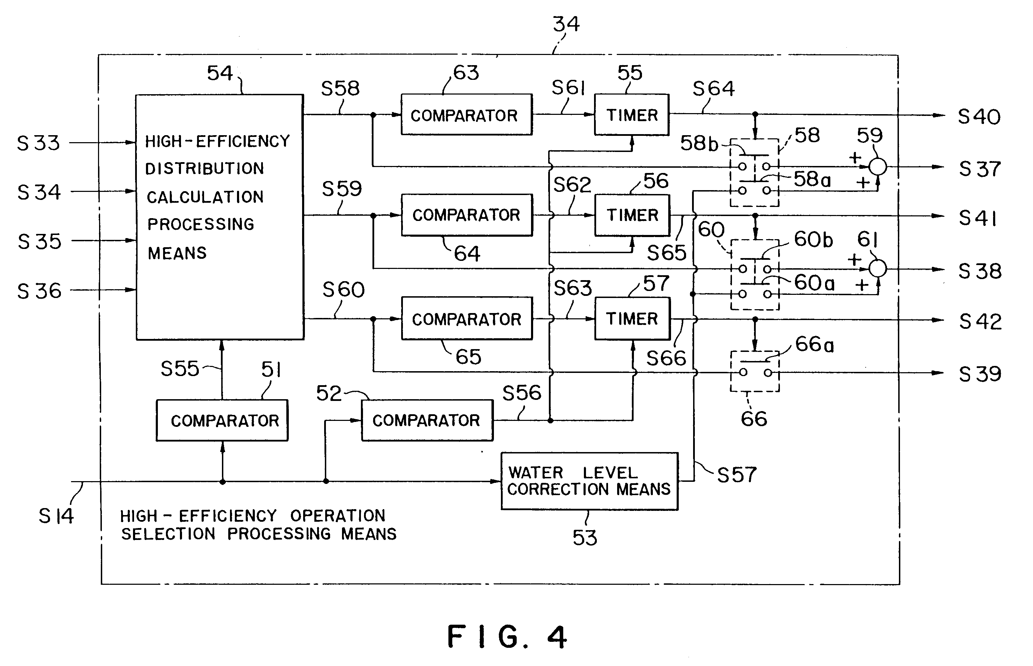

As shown in FIG. 4, the selection processing means is configured from comparators 51, 52, 63, 64 and 65, a water level correction means 53, a high-efficiency distribution calculation processing means 54, timers 55, 56 and 57, switches 58, 60 and 66, and adders 59 and 61, all connected as shown in the figure.

The following is a description of the operating procedures for the control system of a first embodiment having the configuration described above, and with reference to FIG. 3 and FIG. 4.

The water level gauge 31 is for the detection of the water level at the water intake 1, and the detection signal $S_{31}$ is supplied to the flow characteristic calculation means 32. The gate degree of opening gauge 33 is to detect a degree of opening of the gate 2, and the detection signals $S_{32}$ (analog signals) are supplied to the flow characteristic calculation means 32.

The flow characteristic calculation means 32 calculates the water quantity Qa that flows through the gate 2 on the basis of equation (1) and the detection signal $S_{31}$ and detection signal $S_{32}$, and the results of calculation are supplied to the high-efficiency operation selection means 34 as flow intake amount signals $S_{33}$.

$$Qa = f(Ha, Ga) \qquad (1)$$

Here, Ha expresses the water level of the water intake 1, and Ga expresses the degree of opening of the gate 2. In this manner, the water quantity Qa is expressed as a function of the water level of the water intake and the degree of opening of the gate.

On the basis of the flow amount signals $S_{33}$ input from the flow characteristic calculation means 32, the detection signals $S_{14}$ input from the water level gauge 27 of the head tank 4, and the failure signals $S_{34}$, $S_{35}$ and $S_{36}$ input from the automatic control means 35, 36 and 37 that automatically operate the generating units 5, 6 and 7, the high-efficiency operation selection means 34 calculates the flow to be distributed to the generating units 5, 6 and 7 and these calculation results are respectively output as flow amount objective value signals

$S_{37}$, $S_{38}$ and $S_{39}$ to the calculation means 38, 39 and 40.

In addition to this, the high-efficiency operation selection means 34 forms start command signals $S_{40}$, $S_{41}$ and $S_{42}$ for the generating units 5, 6 and 7, and respectively outputs them to the automatic control means 35, 36 and 37.

On the basis of the respective flow objective value signals $S_{37}$, $S_{38}$ and $S_{39}$, the calculation means 38, 39 and 40 calculates the power objective value of the generating units 5, 6 and 7 and those calculation results are applied to the deviation calculators 41, 42 and 43 as power objective value signals $S_{43}$, $S_{44}$ and $S_{45}$.

The actual output signals $S_{46}$, $S_{47}$ and $S_{48}$ of the generating units 5, 6 and 7 and output from the automatic control means 35, 36 and 37 are applied to the deviation calculators 41, 42 and 43 which calculate the respective deviations between the actual output signals $S_{46}$, $S_{47}$ and $S_{48}$, and the power objective value signals $S_{43}$, $S_{44}$ and $S_{45}$, and these calculation results are output as output deviation signals $S_{49}$, $S_{50}$ and $S_{51}$ to the automatic control means 35, 36 and 37.

When the start command signals $S_{40}$, $S_{41}$ and $S_{42}$ are applied to the automatic control means 35, 36 and 37, the operation of the generating units 5, 6 and 7 starts and the load of the generating units 5, 6 and 7 is controlled so that the output deviation signals $S_{49}$, $S_{50}$ and $S_{51}$ tend towards zero. The signals $S_{49}$, $S_{50}$ and $S_{51}$ are obtained by outputting actual output signals $S_{46}$, $S_{47}$ and $S_{48}$ corresponding to the actual output of the generating units 5, 6 and 7 to the deviation calculation means 41, 42 and 43. In addition, if some abnormality has occurred in the generating units 5, 6 and 7, then the failure signals $S_{34}$, $S_{35}$ and $S_{36}$ are output to the high efficiency operation selection means 34.

FIG. 4 shows an example of a high-efficiency operation selection means 34.

The detection signals $S_{14}$ of the water level gauge 27 are applied to the comparators 51 and 52 and to the water level correction means 53. The comparator 51 detects that the detection signal $S_{14}$ is lower than the lower limit reference value corresponding to the lower limit value for the water level of the head tank 4, and those detection signals are applied to the high-efficiency distribution calculation means 54 as start lock signals $S_{55}$. The comparator 52 detects that the detection signals $S_{14}$ are greater than the upper limit reference value corresponding to the upper limit of the water level of the head tank 4, and those detection signals $S_{56}$ are applied to the timers 55, 56 and 57.

The water level correction means 53 corrects for changes in the correlation between the intake amount and the head tank water level that occur over the years, and those correction signals $S_{57}$

are applied to one of the input terminals of the adder 59 via the contact 58a of the switch 58, and are also applied to one of the input terminals of the adder 61 via the contact 60a of the switch 60.

On the basis of the intake flow quantity Qa from the water intake 1 and corresponding to the flow amount signals $S_{33}$, the high-efficiency distribution calculation means 54 calculates the flow amounts Q1, Q2 and Q3 to be given to the respective generating units so that the total sum P of the output of the generating units 5, 6 and 7 is maximized, and the calculation results are output as the distribution flow amount signals $S_{58}$, $S_{59}$ and $S_{60}$. The distribution flow amount signals $S_{58}$, are applied to the comparator 63 and to the other input terminal of the adder 59 via the contact 58b of the switch 58. The distribution flow amount signals $S_{59}$, are applied to the comparator 64 and to the other input terminal of the adder 61 via the contact 60b of the switch 60. The distribution flow amount signals $S_{60}$, are applied to the comparator 65 and are also output as flow amount objective value signals $S_{39}$ via the contact 66a of the switch 66.

Here, the high-efficiency distribution calculation means 54 executes the calculations of the following equations (2) and (3)

$$Qa = Q_1 + Q2 + Q3 \qquad (2)$$

$$P = P1 + P2 + P3 \qquad (3)$$

The combination of the flow amounts Q1, Q2 and Q3 that maximizes the total sum P is then calculated.

Then, P1, P2 and P3 are the respective outputs of the generating units 5, 6 and 7 and these are expressed in the following manner by equations (4) through (6).

$$P1 = K1 (Q1) \qquad (4)$$

$$P2 = K2 (Q2) \qquad (5)$$

$$P3 = K3 (Q3) \qquad (6)$$

where, Kn (Qn) expresses the flow-output characteristic of the respective generating units. Also, when the start lock signal $S_{55}$ is applied, the high-efficiency distribution calculation means 54 sets the value for the distribution flow amount signals $S_{58}$, $S_{59}$ and $S_{60}$ at zero. Furthermore, the calculation processing described above is executed when the failure signals $S_{34}$, $S_{35}$ and $S_{36}$ are input, and the corresponding flow amounts Q1, Q2 and Q3 are in the status where they have been set to zero beforehand.

The comparators 63, 64 and 65 are for detecting that the respective flow distribution signals $S_{58}$,

$S_{59}$ and $S_{60}$ are above the non-load flow amount for the generating units 5, 6 and 7, and those detection signals $S_{61}$, $S_{62}$ and $S_{63}$ are applied to the trigger input terminal of the timers 55, 56 and 57.

The timers 55, 56 and 57 are so that there is no unnecessary start/stop during gate operation and so that the influence of water arrival/reduction is removed, and respectively output the signals $S_{64}$, $S_{65}$ and $S_{66}$ when respective set times have elapsed from when the detection signals $S_{61}$, $S_{62}$ and $S_{63}$ have been applied to the trigger input terminal. Furthermore, when signals $S_{56}$ from the comparator 52 are applied, the respective set times are switched to the set time that shortens the water arrival time. Also, these detection signals $S_{64}$, $S_{65}$ and $S_{66}$ are respectively output as the start command signals $S_{40}$, $S_{41}$ and $S_{42}$ and the switches 58, 60 and 66 are turned on.

The adder 59 is to add the distribution flow amount signal $S_{58}$ and the correction signal $S_{57}$ and the results of addition are output as the flow amount objective value signals $S_{37}$. In addition, the adder 61 is for adding the distribution flow amount signals $S_{59}$ and the correction signals $S_{57}$ and the results of addition are output as the flow amount objective value signals $S_{38}$, while the output signals of the switch 66 are output as flow amount objective value signals $S_{39}$.

In the configuration described above, accompanying the gradual opening of the gate 2, flow amount signals $S_{33}$ corresponding to the flow quantity Qa from the flow characteristic calculation means 32 are applied to the high-efficiency operation selection means 34 and as has been described above, the high-efficiency distribution calculation means 54 calculates the intake flow amounts Q1, Q2 and Q3 that are to be distributed to the generating units 5, 6 and 7, and outputs corresponding distribution flow amount signals $S_{58}$, $S_{59}$ and $S_{60}$.

When these distribution flow amount signals $S_{58}$, $S_{59}$ and $S_{60}$ are output at above the non-load flow amount of the respective generating units 5, 6 and 7, the signals $S_{61}$, $S_{62}$ and $S_{63}$ are output from the comparators 63, 64 and 65 to trigger the timers 55, 56 and 57.

By this, the signals $S_{64}$, $S_{65}$ and $S_{66}$ are output from the timers 55, 56 and 57 upon the elapse of respective times set for the timers 55, 56 and 57 after the signals $S_{61}$, $S_{62}$ and $S_{63}$ have been output, and this starts the start processing for the automatic control means 35, 36 and 37 to start the generating units 5, 6 and 7.

In addition, when the signals $S_{64}$, $S_{65}$ and $S_{66}$ are output, the switches 58, 60 and 66 are turned on, so that the signal $S_{58}$ and the signal $S_{57}$ is input to the adder 59, and the addition results are output to the calculation means 38 as the flow amount objective value signals $S_{37}$, the signal $S_{59}$ and the signal $S_{57}$ are input to the adder 61 and the addition result is output to the calculation means 39 as the flow amount objective value signal $S_{38}$, and the signal $S_{60}$ is output to the calculation means 40 as the flow amount objective value signal $S_{39}$.

By this, the power objective value signals $S_{43}$, $S_{44}$ and $S_{45}$ corresponding to the flow amount objective values at that time are output from the calculation means 38, 39 and 40, and output deviation signals $S_{49}$, $S_{50}$ and $S_{51}$ corresponding to the deviation between those power objective values and the actual output, are output from the deviation calculators 41, 42 and 43 to the automatic control means 35, 36 and 37. By this, the generating units 5, 6 and 7 are controlled so that their output becomes the objective value and as a result, the total sum of the output of the hydroelectric power station is controlled so as to be maximum.

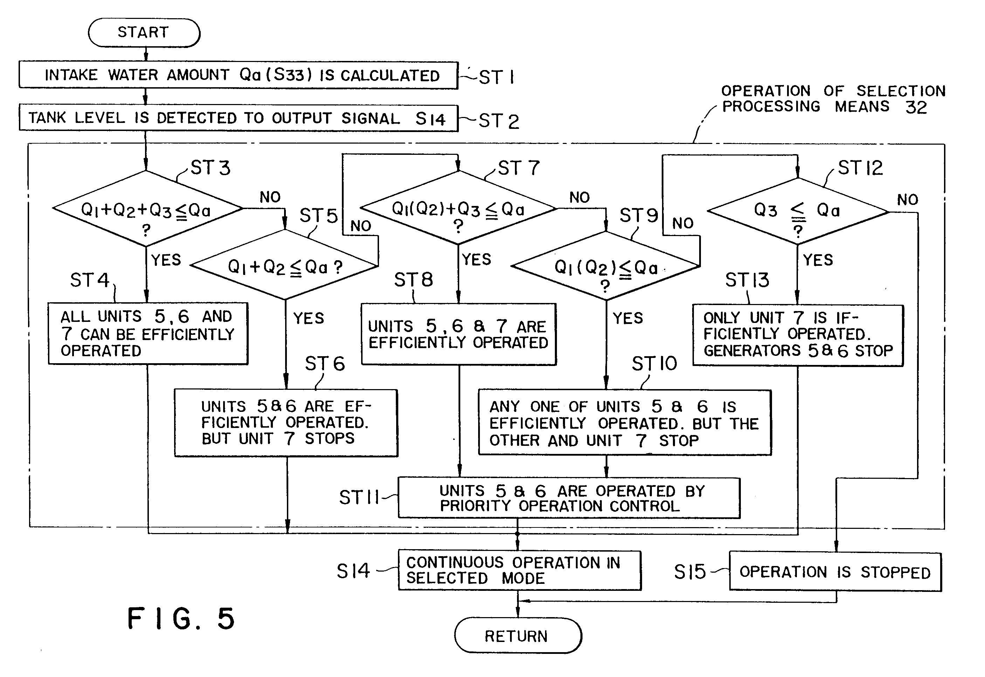

FIG. 5 is a flow chart indicating an outline of the operation described above. In the figure, the water level of the water intake 1 and the degree of opening of the gate 2 are used as the basis for the flow characteristic calculation means 32 to calculate the intake flow amount to the head tank 4 (step ST1). The signals $S_{14}$ from the water level gauge 27 that detects the water level of the head tank 4 are output to the flow characteristic calculation means 32 along with the signals $S_{33}$ (step ST2).

In the flow characteristic calculation means 32, there is practically simultaneous processing for the operation for from step ST3 to ST13 but for the sake of convenience of description, they will be described as successive processing operations.

On the basis of the previous equations (2) through (6) and considering the output P1 through P3 of the first generating unit 5, the second generating unit 6 and the third generating unit 7, the calculated water amount Qa is judged to correlate with the necessary water amounts Q1 through Q3.

For example, a judgment is made for whether or not the calculated water amount Qa is greater than the total sum "Q1 + Q2 + Q3" of each of the necessary water amounts Q1, Q2 and Q3 (step ST3). If the water amount Qa is greater than the total sum, then it is determined that the 1st through 3rd generating units are operating efficiently (step ST14) and continuous operation of the generating units 5, 6 and 7 is performed in the mode selected via each of the automatic control means 35, 36 and 37.

When it has been judged in step ST3 that the water amount Qa does not exceed the total sum "Q1 + Q2 + Q3", then the processing skips to step ST5, and a judgment is made for whether the water amount Qa exceeds the sum "Q1 + Q2" of the water amount Q1 and Q2 necessary for efficient operation of the 1st and 2nd generating units that have a large generation capacity. In step ST5, if it is judged that the water amount Qa is less than the total sum "Q1 + Q2 + Q3" and greater than the sum "Q1 + Q2" of the water amount Q1 and Q2 necessary for efficient operation of the large-capacity 1st and 2nd generating units, that is, when "Q1 + Q2" ≤ Qa < Q1 + Q2 + Q3, then the processing skips to step ST6 and a decision is made to stop the generating unit 7 and perform efficient simultaneous operation for the generating units 5 and 6 only.

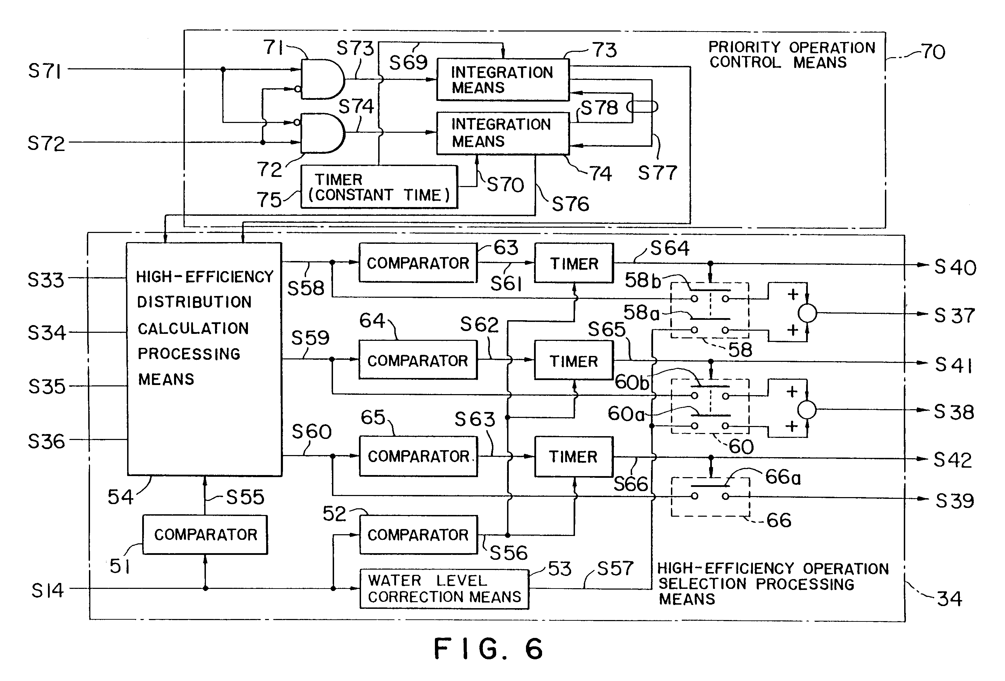

In step ST5, if it is judged that "Qa < Q1 + Q2" then, the processing skips to the judgment block of step ST7, and a judgment is made for whether simultaneous efficient operation is possible for the one of the large-capacity generating units 5 and 6, and the small-capacity generating unit 7, that is if "Q1 (or Q2) + Q3 ≤ Qa". If "Q1 (or Q2) + Q3 ≤ Qa" in step ST7, then a decision is made (in step ST8) for the simultaneous efficient operation of one of the large-capacity generating units 5 and 6, and the small-capacity generating unit 7. In addition, if it is judged in step ST7 that "Qa < Q1 (Q2) + Q3" then the processing skips to step ST9 and a judgment is made for whether "Q1 (Q2) ≤ Qa < Q1 (Q2) + Q3". If it is judged that "Q1 (Q2) ≤ Qa" in ST9, then in step 10, a command is output to the automatic control means 35 or 36 so that there is efficient operation of one of the generating units 5 or 6. As in the previously described step ST8, the determination of the control command in this step ST10 is to operate either of the plural number of generating units with priority and so the operation continues until steps ST8 and ST10, and a decision is made as to which is to be given priority operation in step ST11. The detailed configuration for performing this priority control is described below for the second embodiment, with reference to FIG. 6.

In the previously described ST9, when it is judged that "Qa < Q1 (or Q2)", the control process proceeds to step 12 where a judgment is made for whether or not "Q3 ≤ Qa". If it is judged in step ST12 that "Q3 ≤ Qa" then, the operation of one of the large-capacity generating units 5 and 6 is stopped and efficient operation is preformed using only the small-capacity generating unit 7.

In the previously described step ST14, a command is given to each of the automatic control means 35, 36 and 37 so that the three generating units 5, 6 and 7 are all operated so that the total efficiency is greatest for the selected mode whether that be the case for step 4, or the case for steps ST6, ST11 and ST13.

In step ST12, when it is judged that "Qa < Q3", the operation proceeds to step ST15 and the operation of all generating units 5, 6 and 7 is stopped. In this case, maintenance discharge is performed so as to ensure the necessary water amount in the ancillary facilities downstream.

In this manner, in the first embodiment of the present invention, the water level of the water intake 1 and the degree of opening of the gate 2 are used as the basis for suitably calculating the flow amount from the gate 2 and this calculated flow amount is distributed between the generating units 5 and 6 including the small-capacity generating unit 7 so that the total output Pa of the power station is maximized, thereby increasing the power generation efficiency. In addition, it is also possible to prevent unnecessary changing or overflow of the water level of the head tank 4 and therefore prevent the occurrence of trip of the generating units due to a drop in the water level.

Each generating unit is also operated uniformly so that the operating ratio of each of the generating units is averaged and it is therefore possible to improve the equipment investment.

In FIG. 5 that shows a flowchart for describing the operation, the priority control of the large-capacity generating units 5 and 6 was described as being performed in step ST11. The following will be a description of a specific configuration of a second embodiment that performs priority control, with reference to FIG. 6.

In FIG. 6, elements of the configuration that are the same as or equivalent to elements of the configuration of FIG. 4 are represented by the same numerals, and the corresponding descriptions of them are omitted.

The configuration of the high-efficiency operation selection means 34 in FIG. 6 is exactly the same as that of the first embodiment. However, in addition to the signal $S_{33}$ from the flow characteristic calculation means 32, the feedback signals $S_{34}$, $S_{35}$ and $S_{36}$ from the automatic control means 35, 36 and 37, and the signal $S_{55}$ from the comparator 51, the high-efficiency distribution calculation means 54 is also configured so that the priority operation signal $S_{75}$ for the first large-capacity generating unit 5 and the priority operation signal $S_{76}$ for the second large-capacity generating unit 6 are supplied from the priority operation control means 70.

The priority operation control means 70 is configured from AND circuits 71 and 72, integration means 73 and 74, a timer 75 that supplies time signals $S_{69}$ and $S_{70}$ which are inverted at a constant cycle, to the integration means 73 and 74. The time signal $S_{70}$ output from the timer 75 switches at a long cycle of from half a year to one year and so when there is priority operation for either of the generating units, then for example, either the signal $S_{69}$ or the signal $S_{70}$ is made

"high" and the other signal $S_{70}$ or $S_{69}$ made "low" so that the first generating unit 5 is operated from January through June, and the second generating unit 6 is operated from July through December.

The AND circuit 71 of the control means 70 inputs an inverted signals for the parallel operation signal $S_{71}$ of the first generating unit 5 and parallel operation signal $S_{72}$ for the second generating unit 6, and outputs the first generating unit priority signal $S_{73}$, and the AND circuit 72 inputs an inverted signal for the signal $S_{71}$, and the signal $S_{72}$ and outputs the signal $S_{74}$. The integration means 73 inputs the signal $S_{73}$ and the time signal $S_{69}$ and outputs a priority operation signal $S_{75}$ to the processing means 54 when the 1st generating unit priority signal $S_{73}$ is a significant "1" and when the time signal $S_{69}$ is also a significant "1". In addition, the signal $S_{74}$ output from the AND circuit 72 is supplied to the integration means 74 along with the signal $S_{70}$ output from the timer 75, and when the signal $S_{74}$ is a significant "1" and the time signal $S_{70}$ is also a significant "1", the priority usage time for the second generating unit 6 is integrated with the 2nd generating unit 6 being for priority usage.

The integration means 73 and 74 alternately output signals $S_{75}$ and $S_{76}$, and signals $S_{77}$ and $S_{78}$ that are at the same level, to the other integration means 74 and 73, and these signals $S_{77}$ and $S_{78}$ clear both priority usage rights when either of the generating units 5 or 6 is used with priority for the set time portions prior to the time set by the timer 75.

The provision of a priority operation control means having the configuration and function as described above, a high-efficiency operation control system for a generating unit and according to a second embodiment enables prevents exceedingly long-term use of either of the generating units when there is provided a plural number of generating units which are used for solitary operation and with priority use, and thus enables uniform use over an averaged time, and thus enables the life of the equipment to be extended.

Moreover, the above described first and second embodiments have a gate provided at an upstream water intake but the present invention is also applicable when there is a power station upstream. In addition, in the above described first and second embodiments, there are provided three generating units but it is also possible to apply the present invention in the same manner when the hydroelectric power station has more than this number of generating units. In addition, the start command and the stop command can be separately detected and output to an automatic control means.

**Claims**

1. Control system for operating a plural number of generating units (5, 6, 7) in a hydroelectric power station with high efficiency, wherein said hydroelectric power station furthermore comprises a head tank for storing intake water supplied from upstream via a gate (2) at a water intake opening,
   characterized by:
   tank level detection means (27) for detecting the water level of the head tank, intake level detection means (31) for detecting the water level at the water intake opening and opening degree detection means (33) for detecting the degree of opening of the gate (2),
   flow amount calculation means (32) receiving the output signals of the intake level detection means (31) and the opening degree detection means (33) for calculating the amount of water flowing into said head tank (4) on the basis of the detected intake water level and the detected degree of opening of the gate and delivering an output signal indicating the result of said calculation,
   processing means (34) receiving the output of the flow calculation means (32) and of the tank level detection means (27) and outputting flow amount objective value signals, for determining flow amount objective values for each generating unit on the basis of the calculated water flow into the head tank and the detected water level in the head tank, said flow amount objective values representing a distribution of water flow on the individual generating units so that each generating unit can generate power most efficiently and the total power generation output is maximised,
   a plurality of power objective value calculation means (38, 39, 40) receiving the flow amount objective value signals, wherein each power objective value calculation means (38, 39, 40) is associated to a corresponding generating unit (5, 6, 7), is designed for calculating the power that is most efficiently generated by the respective generating unit (5, 6, 7) on the basis of the flow amount objective values calculated by the operation control means (34), and provides a power objective value signal as output,
   a plurality of deviation calculation means (41, 42, 43), each being associated with a corresponding generating unit (5, 6, 7), having as one input the power objective value signal of the corresponding power calculation means (38, 39, 40) and as second input an actual output signal from the corresponding generating unit (5, 6, 7) for calculating the deviation of the power objective value from the actual output value and outputting signals indicating the power deviation (S49, S50, S51) as control signals for the corresponding generating unit.

2. The control system according to claim 1, characterized by a plurality of automatic control means (35, 36, 37), which are provided to each of said plurality of generating units (5, 6, 7), respectively, for starting operation of the corresponding generating unit (5, 6, 7) on the basis of start command signals (S40, S41, S42) output from said processing means (34) and for stopping operation of the corresponding generating unit (5, 6, 7) on the basis of the power deviation signals (S49, S50, S51) resulting from the calculation of said deviation calculation means (41, 42, 43).

3. Control system according to claim 2, characterized in that said plurality of automatic control means (35, 36, 37) respectively output and feedback failure signals (S34, S35, S36) to the processing means (34) when an abnormality has occured in one of the generating units (5, 6, 7,).

4. The control system of claim 1, wherein
   at least one of the plural number of generating units provided at said hydroelectric power station is a small-capacity generating unit (7) that generates a small capacity of power corresponding to a water amount ensuring the discharge of a constant of water supplied to amount of water for a demand from a downstream power station, and the remaining large-capacity generating units (5, 6) generate a large-capacity power when a supplied water amount is sufficient.

5. The control system of claim 4, wherein
   said plural number of large-capacity generating units (5, 6) comprises a first generating unit (5) and a second generating unit (6).

6. The control system of claim 4, wherein
   said selection processing means (34) is configured from a first comparison means (51) that uses detection signals ($S_{14}$) of a water level detector (27) that detects a water level of said head tank (4) as the basis for comparing a lower limit reference value indicating a lower limit water level of said head tank (4) and said detection signals ($S_{14}$); a second comparator (52) that compares an upper limit reference value that indicates an upper water level of said head tank (4) with said detection signals ($S_{14}$); a water level correction means (53) that corrects detection signals ($S_{14}$) by adding the

degree of change when the head tank (4) water level indicated by said detection signals ($S_{14}$) has changed over the years to a water level different from that initially; a high-efficiency distribution water amount calculation processing means (54) to which are input flow amount signals supplied from said flow characteristic calculation means (34) and that indicated the flow amount from said water intake, a plural number of failure diagnosis signals supplied from said automatic control means, and comparison result signals of said first comparator (51), and which outputs distribution flow signals for each generating unit; third, fourth and fifth comparators (63, 64, 65) that compare whether or not distribution water amount signals for the generating units are greater than non-load flow amounts for the generating units; first, second and third timers (55, 56, 57) to which are input the detection signals indicating that the head tank water level exceeds an upper limit value as the result of comparison by said second comparator (52), and distribution water amount signals for each generating unit and which are output by said third, fourth and fifth comparators (63, 64 65), and which output start command signals to each automatic control means (35, 36 37) of each generating unit after the elapse of a set time; first, second and third switches (58, 60, 66) that switch on when there is correction of the water level on the basis of correction water level signals from said water level correction means and distribution flow amount signals for each said generating unit; and first and second adders (59, 61) that output said flow amount objective value signals to each automatic control means (35, 36) of the first and second generating units (5, 6) when said switches are on.

7. The control system of claim 1; further comprising

a priority operation control means (70) that successively switches a generating unit (5, or 6) that is in solitary operation when a certain time is reached, so that there is not excessive operation of one particular generating unit (5, or 6) when there is solitary operation of one generating unit (5 or 6) out of said plural number of generating units (5, or 6).

8. The control system of claim 7; wherein

said priority operation control means (70) is provided inside a high efficiency operation control system for a hydroelectric power station which is provided with at least one small-capacity generating unit (7) that generates a small capacity of power corresponding to a water amount ensuringthe discharge of a constant amount of water and a plural number of large-capacity generating units (5, 6).

9. The control system of claim 8, wherein

said plural number of large-capacity generating units (5, 6) comprises a first generating unit (5) and a second generating unit (6).

10. The control system of claim 9, wherein

said priority operation control means (70) is configured from a first AND circuit (71) to which are input first generating unit (5) parallel signals indicating that there is parallel operation of a first generating unit (5), inverted signals of second generating unit (6) parallel signals that indicate that there is parallel operation of a second generating unit (6), and to which are output first generating unit (5) solitary operation signals when only a first generating unit (5) is operating; a second AND circuit (72) to which are input second generating unit (6) parallel signals indicating that there is parallel operation of a second generating unit (6), inverted signals of first generating unit (5) parallel signals that indicate that there is parallel operation of a first generating unit (5), and to which are output second generating unit (6) solitary operation signals when only a second generating unit (6) is operating; a timer (75) that counts the time until the output of a switching signal at a constant cycle of at least half a year; a first integration means (73) that, on the basis of said switching signals from said timer (75) and said first generating unit (5) solitary operation signals, integrates the time that said first generating unit (5) has been in solitary operation; and a second integration means (74) that, on the basis of said switching signals from said timer (75) and said second generating unit solitary operation signals, integrates the time that said second generating unit has been in solitary operation.

11. The control system of claim 10, wherein said first and second integration means (73, 74) have a function so that even when the time (75) of said constant cycle set by said timer has still not been counter, the input of clear signals that indicate that the solitary operation time of that generating unit has exceeded the switching necessary time switches a generating unit on the other side and that is to have solitary operation.

**Patentansprüche**

1. Steuersystem zum Betreiben einer Mehrzahl von Stromerzeugungseinheiten (5, 6, 7) in einem Wasserkraftwerk mit hohem Wirkungsgrad, wobei das Wasserkraftwerk weiterhin einen Kopftank zum Speichern von Einlaufwasser umfaßt, das von der stromaufwärtigen Seite über ein Tor (2) bei einer Wassereinlauföffnung zugeführt wird, gekennzeichnet durch:
eine Tankniveau-Detektionseinrichtung (27) zum Detektieren des Wasserstands des Kopftanks, eine Einlaufniveau-Detektionseinrichtung (31) zum Detektieren des Wasserstands bei der Wassereinlauföffnung und eine Öffnungsgrad-Detektionseinrichtung (33) zum Detektieren des Grades der Öffnung des Tors (2),
eine Flußmengen-Berechnungseinrichtung (32) zum Berechnen der in den Kopftank (4) fließenden Wassermenge auf der Grundlage des detektierten Einlauf-Wasserstands und des detektierten Grads der Öffnung des Tors, welche die Ausgangssignale der Einlaufniveau-Detektionseinrichtung (31) und der Öffnungsgrad-Detektionseinrichtung (33) empfängt und welche ein Ausgangssignal abgibt, das das Ergebnis der Berechnung angibt,
eine Verarbeitungseinrichtung (34), welche den Ausgang der Flußberechnungseinrichtung (32) und der Tankniveau-Detektionseinrichtung (27) empfängt und Flußmengen-Sollwertsignale abgibt, zum Bestimmen von Flußmengen-Sollwerten für jede Stromerzeugungseinheit auf der Grundlage des berechneten Wasserflusses in den Kopftank und des detektierten Wasserstands in dem Kopftank, wobei die Flußmengen-Sollwerte eine derartige Verteilung des Wasserflusses auf die einzelnen Stromerzeugungseinheiten darstellen, daß jede Stromerzeugungseinheit am effizientesten Leistung erzeugen kann und die gesamte Leistungserzeugungs-Abgabe maximiert wird,
mehrere Leistungssollwert-Berechnungseinrichtungen (38, 39, 40), welche die Flußmengen-Sollwertsignale empfangen, wobei jede Leistungssollwert-Berechnungseinrichtung (38, 39, 40) einer entsprechenden Stromerzeugungseinheit (5, 6, 7) zugeordnet ist, für das Berechnen der Leistung konzipiert ist, die am effizientesten von der entsprechenden Stromerzeugungseinheit (5, 6, 7) auf der Grundlage der Flußmengen-Sollwerte erzeugt wird, die durch die Betriebssteuereinrichtung (34) berechnet wurden, und als Ausgang ein Leistungssollwert-Signal liefert, mehrere Abweichungs-Berechnungseinrichtungen (41, 42, 43) zum Berechnen der Abweichung des Leistungssollwerts von den tatsächlichen Abgabewert, welche jeweils einer entsprechenden Stromerzeugungseinheit (5, 6, 7) zugeordnet sind und als einen Eingang das Leistungssollwert-Signal der entsprechenden Leistungs-Berechnungseinrichtung (38, 39, 40) und als zweiten Eingang ein Ist-Abgabesignal von der entsprechenden Stromerzeugungseinheit (5, 6, 7) haben und Signale (S49, S50, S51), welche die Leistungsabweichung angeben, als Steuersignale für die entsprechende Stromerzeugungseinheit abgeben.

2. Steuersystem nach Anspruch 1, gekennzeichnet durch eine Mehrzahl von automatischen Steuereinrichtungen (35, 36, 37), welche für jede Stromerzeugungseinheit aus der Mehrzahl von Stromerzeugungseinheiten (5, 6, 7) jeweils vorgesehen sind, um den Betrieb der entsprechenden Stromerzeugungseinheit (5, 6, 7) auf der Grundlage von Start-Befehlssignalen (S40, S41, S42) einzuleiten, die von der Verarbeitungseinrichtung (34) abgegeben werden, und um den Betrieb der entsprechenden Stromerzeugungseinheit (5, 6, 7) auf der Grundlage der Leistungsabweichungssignale (S49, S50, S51) zu beenden, die aus der Berechnung der Abweichungs-Berechnungseinrichtung (41, 42, 43) resultieren.

3. Steuersystem nach Anspruch 2, dadurch gekennzeichnet, daß die Mehrzahl von automatischen Steuereinrichtungen (35, 36, 37) jeweils Fehlersignale (S34, S35, S36) an die Verarbeitungseinrichtung (34) abgeben und zurückkoppeln, wenn ein anomaler Zustand in einer der Stromerzeugungseinheiten (5, 6, 7) aufgetreten ist.

4. Steuersystem nach Anspruch 1, bei dem mindestens eine aus der Mehrzahl von Stromerzeugungseinheiten, die in dem Wasserkraftwerk vorgesehen sind, eine Stromerzeugungseinheit (7) mit geringer Leistungsfähigkeit ist, welche eine geringe Menge an Leistung erzeugt, die einer Wassermenge entspricht, welche das Abgeben einer konstanten Wassermenge gewährleistet, die einer Wassermenge für einen Bedarf eines stromabwärts gelegenen Kraftwerks zugeführt wird, und die restlichen Stromerzeugungseinheiten (5, 6) mit großer Leistungsfähigkeit eine große Menge an Leistung erzeugen, wenn die Menge des zugeführten Wassers ausreichend ist.

5. Steuersystem nach Anspruch 4, bei dem die Mehrzahl von Stromerzeugungseinheiten (5, 6) mit großer Leistungsfähigkeit eine erste Stromerzeugungseinheit (5) und eine zweite Stromerzeugungseinheit (6) umfaßt.

6. Steuersystem nach Anspruch 4, bei dem die Auswahl-Verarbeitungseinrichtung (34) umfaßt: eine erste Vergleichseinrichtung (51), welche Detektionssignale ($S_{14}$) eines Wasserstandsdetektors (27), der den Wasserstand des Kopftanks (4) detektiert, als Grundlage für das Vergleichen eines Referenzwertes für eine untere Schwelle, die eine untere Grenze des Wasserstands des Kopftanks (4) angibt, mit den Detektionssignalen ($S_{14}$) verwendet, einen zweiten Vergleicher (52), der einen Referenzwert für eine obere Schwelle, die einen oberen Wasserstand des Kopftanks (4) angibt, mit den Detektionssignalen ($S_{14}$) vergleicht, eine Wasserstands-Korrektureinrichtung (53), welche die Detektionssignale ($S_{14}$) korrigiert, indem das Ausmaß der Änderung addiert wird, wenn der Wasserstand des Kopftanks (4), der durch die Detektionssignale ($S_{14}$) angezeigt wird, sich über die Jahre zu einem Wasserstand verändert hat, der verschieden von dem ursprünglichen ist, eine Verarbeitungseinrichtung zum Berechnen einer Wassermengenverteilung mit hohem Wirkungsgrad (54), in welche die Flußmengen-Signale, die von der Flußcharakteristik-Berechnungseinrichtung (34) geliefert werden und welche die Flußmenge von dem Wassereinlauf anzeigen, eine Mehrzahl von Fehlerdiagnosesignalen, die von der automatischen Steuereinrichtung geliefert werden, und Vergleichsergebnis-Signale des ersten Vergleichers (51) eingegeben werden und welche Flußverteilungssignale für jede Stromerzeugungseinheit abgibt, einen dritten, vierten und fünften Vergleicher (63, 64, 65), welche vergleichen, ob die Wassermengenverteilungs-Signale für die Stromerzeugungseinheiten größer als die Flußmengen für die Stromerzeugungseinheiten ohne Last sind oder nicht, einen ersten, zweiten und dritten Zeitgeber (55, 56, 57), in welche die Detektionssignale, welche als Folge des Vergleichs durch den zweiten Vergleicher (52) anzeigen, daß der Wasserstand des Kopftanks einen oberen Schwellenwert übersteigt, und Wassermengenverteilungs-Signale für jede Stromerzeugungseinheit eingegeben werden, welche von dem dritten, vierten und fünften Vergleicher (63, 64, 65) abgegeben werden, und welche Startbefehls-Signale an jede automatische Steuereinrichtung (35, 36, 37) jeder Stromerzeugungseinheit nach dem Verstreichen einer eingestellten Zeit abgeben, einen ersten, zweiten und dritten Schalter (58, 60, 66), welche sich einschalten, wenn es eine Korrektur des Wasserstands auf der Grundlage der Wasserstandskorrektur-Signale von der Wasserstands-Korrektureinrichtung und der Flußmengenverteilungs-Signale für jede Stromerzeugungseinheit gibt, und einen ersten und einen zweiten Addierer (59, 61), welche die Flußmengen-Sollwertsignale an jede automatische Steuereinrichtung (35, 36) der ersten und zweiten Stromerzeugungseinheit (5, 6) abgeben, wenn die Schalter eingeschaltet sind.

7. Steuersystem nach Anspruch 1, welches weiterhin eine Vorrangsbetrieb-Steuereinrichtung (70) umfaßt, welche aufeinanderfolgend eine Stromerzeugungseinheit (5 oder 6), welche im Einzelbetrieb arbeitet, umschaltet, wenn eine bestimmte Zeit erreicht ist, so daß es keinen übermäßigen Betrieb einer bestimmten Stromerzeugungseinheit (5 oder 6) gibt, wenn ein Einzelbetrieb einer Stromerzeugungseinheit (5 oder 6) aus der Mehrzahl von Stromerzeugungseinheiten (5 oder 6) vorliegt.

8. Steuersystem nach Anspruch 7, bei dem die Vorrangsbetrieb-Steuereinrichtung (70) innerhalb eines Steuersystems für einen hocheffizienten Betrieb für ein Wasserkraftwerk vorgesehen ist, das zumindest mit einer Stromerzeugungseinheit (7) mit geringer Leistungsfähigkeit, welche eine kleine Menge an Leistung erzeugt, die einer Wassermenge entspricht, welche die Abgabe einer konstanten Wassermenge gewährleistet, und einer Mehrzahl von Stromerzeugungseinheiten (5, 6) mit großer Leistungsfähigkeit versehen ist.

9. Steuersystem nach Anspruch 8, bei dem die Mehrzahl von Stromerzeugungseinheiten (5, 6) mit großer Leistungsfähigkeit eine erste Stromerzeugungseinheit (5) und eine zweite Stromerzeugungseinheit (6) umfaßt.

10. Steuersystem nach Anspruch 9, bei dem die Vorrangsbetrieb-Steuereinrichtung (70) umfaßt: eine erste UND-Schaltung (71), in welche Parallelsignale einer ersten Stromerzeugungseinheit (5), welche anzeigen, daß es einen Parallelbetrieb einer ersten Stromerzeugungseinheit (5) gibt, invertierte Signale von Parallelsignalen einer zweiten Stromerzeugungseinheit (6), welche anzeigen, daß es einen Parallelbetrieb einer zweiten Stromerzeugungseinheit (6) gibt, eingegeben werden, und zu der Einzelbetriebs-Signale einer ersten Stromerzeugungseinheit (5) ausgegeben werden, wenn nur eine erste Stromerzeugungseinheit (5) arbeitet, eine zweite UND-Schaltung (72), in welche Parallelsignale einer zweiten Stromerzeugungseinheit (6), welche anzeigen, daß es einen Parallelbetrieb einer zweiten Stromerzeugungseinheit (6) gibt, invertierte Signale von Parallelsignalen einer ersten Stromerzeugungseinheit (5) eingegeben werden, welche anzeigen, daß es einen Parallelbetrieb einer ersten Stromerzeugungseinheit (5) gibt, und zu der Einzelbetriebs-Signale einer zweiten Stromerzeugungseinheit (6) abgegeben werden, wenn nur eine zweite Stromerzeugungseinheit (6) arbeitet, einen Zeitgeber (75), welcher die Zeit bis zur Abgabe eines Umschaltsignals bei einem konstanten Zyklus von mindestens einem halben Jahr zählt,
eine erste Integrationseinrichtung (73), welche auf der Grundlage der Umschaltsignale von dem Zeitgeber (75) und der Einzelbetriebs-Signale der ersten Stromerzeugungseinheit (5) die Zeit integriert, während der die erste Stromerzeugungseinheit (5) sich im Einzelbetrieb befunden hat, und
eine zweite Integrationseinrichtung (74), welche auf der Grundlage der Umschaltsignale von dem Zeitgeber (75) und der Einzelbetriebs-Signale der zweiten Stromerzeugungseinheit die Zeit integriert, während der sich die zweite Stromerzeugungseinheit im Einzelbetrieb befunden hat.

11. Steuersystem nach Anspruch 10, bei dem die erste und zweite Integrationseinrichtung (73, 74) solchermaßen funktionieren, daß selbst dann, wenn die Zeit (75) des konstanten Zyklus, die durch den Zeitgeber gesetzt wird, noch nicht gezählt worden ist, die Eingabe von Löschsignalen, welche anzeigen, daß die Einzelbetriebszeit dieser Stromerzeugungseinheit die für das Umschalten erforderliche Zeit überschritten hat, eine Stromerzeugungseinheit auf die andere Seite schaltet und diese einen Einzelbetrieb haben soll.

**Revendications**

1. Système de commande assurant un fonctionnement efficace de plusieurs unités de génération (5, 6, 7) contenues dans une centrale hydroélectrique, dans lequel ladite centrale hydroélectrique comprend en outre un réservoir de tête pour stocker de l'eau d'entrée appliquée depuis l'amont via une porte (2) située au niveau d'une ouverture d'entrée d'eau,
    caractérisé par :
    un moyen de détection de niveau de réservoir (27) pour détecter le niveau d'eau du réservoir de tête, un moyen de détection de niveau d'entrée (31) pour détecter le niveau d'eau au niveau de l'ouverture d'entrée d'eau et un moyen de détection de degré d'ouverture (33) pour détecter le degré d'ouverture de la porte (2), un moyen de calcul de valeur de débit (32) qui reçoit les signaux de sortie du moyen de détection de niveau d'entrée (31) et du moyen de détection de degré d'ouverture (33) pour calculer la valeur du débit d'eau qui s'écoule à l'intérieur dudit réservoir de tête (4) sur la base du niveau d'eau d'entrée détecté et du degré d'ouverture détecté de la porte et pour délivrer un signal de sortie indiquant le résultat dudit calcul ;
    un moyen de traitement (34) qui reçoit la sortie du moyen de calcul de débit (32) et du moyen de détection de niveau de réservoir (27) et qui émet en sortie des signaux de valeur objective de débit pour déterminer des valeurs objectives de débit pour chaque unité de génération sur la base du débit d'eau calculé dans le réservoir de tête et du niveau d'eau détecté dans le réservoir de tête, lesdites valeurs objectives de débit représentant une distribution de débit d'eau sur les unités de génération individuelles de telle sorte que chaque unité de génération puisse générer de l'énergie de façon davantage efficace et que la sortie de génération d'énergie totale soit maximisée ;
    une pluralité de moyens de calcul de valeur objective d'énergie (38, 39, 40) qui reçoivent les signaux de valeur objective de débit, dans lequel chaque moyen de calcul de valeur objective d'énergie (38, 39, 40) est associé à une unité de génération correspondante (5, 6, 7), est conçu pour calculer l'énergie qui est la plus efficacement générée par l'unité de génération respective (5, 6, 7) sur la base des valeurs objectives de débit calculées par le moyen de commande de fonctionnement (34) et produit un signal de valeur objective d'énergie en tant que sortie ;
    une pluralité de moyens de calcul de déviation (41, 42, 43) dont chacun se voit associer une unité de génération correspondante (5, 6, 7) comportant en tant que première entrée le signal de valeur objective d'énergie du moyen de calcul d'énergie correspondant (38, 39, 40) et en tant que seconde entrée un signal de sortie réelle provenant de l'unité de génération correspondante (5, 6, 7) pour calculer la déviation de la valeur objective d'énergie par rapport à la valeur de sortie réelle et pour émettre en sortie des signaux indiquant la déviation d'énergie (S49, S50, S51) en tant que signaux de commande pour l'unité de génération correspondante.

2. Système de commande selon la revendication 1, caractérisé par une pluralité de moyens de commande automatique (35, 36, 37) qui sont prévus respectivement pour chacune de ladite pluralité d'unités de génération (5, 6, 7) pour démarrer le fonctionnement de l'unité de génération correspondante (5, 6, 7) sur la base de signaux de commande de démarrage (S40, S41, S42) émis en sortie depuis ledit moyen de traitement (34) et pour arrêter le fonctionnement de l'unité de génération correspondante (5, 6, 7) sur la base des signaux de déviation d'énergie (S49, S50, S51) résultant du calcul dudit moyen de calcul de déviation (41, 42, 43).

3. Système de commande selon la revendication 2, caractérisé en ce que ladite pluralité de moyens de commande automatique (35, 36, 37) émettent en sortie et appliquent respectivement des signaux de défaillance (S34, S35, S36) au moyen de traitement (34) lorsqu'une anomalie s'est produite dans l'une des unités de génération (5, 6, 7).

4. Système de commande selon la revendication 1, dans lequel au moins l'une des plusieurs unités de génération prévues au niveau de ladite centrale hydroélectrique est une unité de génération à petite capacité (7) qui génère une petite capacité d'énergie correspondant à une quantité d'eau assurant la décharge d'une valeur constante de quantité d'eau fournie en vue d'assurer une demande provenant d'une centrale aval et les unités de génération à grande capacité restantes (5, 6) génèrent une grande capacité d'énergie lorsque la quantité d'eau fournie est suffisante.

5. Système de commande selon la revendication 4, dans lequel lesdites plusieurs unités de génération à grande capacité (5, 6) comprennent une première unité de génération (5) et une seconde unité de génération (6).

6. Système de commande selon la revendication 4, dans lequel ledit moyen de traitement de sélection (34) est configuré à partir d'un premier moyen de comparaison (51) qui utilise des signaux de détection ($S_{14}$) d'un détecteur de niveau d'eau (27) qui détecte un niveau d'eau dudit réservoir de tête (4) en tant que base pour comparer une valeur de référence de limite inférieure indiquant un niveau d'eau de limite inférieure dudit réservoir de tête (4) auxdits signaux de détection ($S_{14}$) ; un second comparateur (52) qui compare une valeur de référence de limite supérieure qui indique un niveau d'eau de limite supérieure dudit réservoir de tête (4) auxdits signaux de détection ($S_{14}$) ; un moyen de correction de niveau d'eau (53) qui corrige des signaux de détection ($S_{14}$) en additionnant le degré de variation lorsque le niveau d'eau du réservoir de tête (4) indiqué par lesdits signaux de détection ($S_{14}$) évolue au fil des ans vers un niveau d'eau différent de celui initialement prévu ; un moyen de traitement de calcul de quantité d'eau de distribution à haut rendement (54) sur lequel sont entrés des signaux de débit appliqués depuis ledit moyen de calcul de caractéristique de débit (34) et qui indiquent le débit en provenance de ladite entrée d'eau, une pluralité de signaux de diagnostic de défaillance appliqués depuis ledit moyen de commande automatique et des signaux de résultat de comparaison dudit premier comparateur (51) et qui émet en sortie des signaux de débit de distribution pour chaque unité de génération ; des troisième, quatrième et cinquième comparateurs (63, 64, 65) qui comparent si oui ou non des signaux de quantité d'eau de distribution pour les unités de génération sont supérieurs à des valeurs de débit en l'absence de charge pour les unités de génération ; des première, seconde et troisième minuteries (55, 56, 57) sur lesquelles sont entrés les signaux de détection qui indiquent que le niveau d'eau du réservoir de tête excède une valeur de limite supérieure en tant que résultat d'une comparaison effectuée par ledit second comparateur (52) et des signaux de quantité d'eau de distribution pour chaque unité de génération, lesquels sont émis en sortie par lesdits troisième, quatrième et cinquième comparateurs (63, 64, 65), et qui émettent en sortie des signaux de commande de démarrage pour chaque moyen de commande automatique (35, 36, 37) de chaque unité de génération après l'écoulement d'un temps établi ; des premier, second et troisième commutateurs (58, 60, 66) qui réalisent une commutation à l'état passant lorsqu'il y a une correction du niveau sur la base de signaux de niveau d'eau de correction provenant dudit moyen de correction de niveau d'eau et des signaux de débit de distribution pour chaque dite unité de génération ; et des premier et second additionneurs (59, 61) qui émettent en sortie lesdits signaux de valeur objective de débit pour chaque moyen de commande automatique (35, 36) des première et seconde unités de génération (5, 6) lorsque lesdits commutateurs sont activés.

7. Système de commande selon la revendication 1, comprenant en outre :

un moyen de commande de fonctionnement prioritaire (70) qui commute successivement une unité de génération (5 ou 6) qui fonctionne de façon solitaire lorsqu'un certain temps est atteint de telle sorte qu'il n'y ait pas un fonctionnement excessif d'une unité de génération particulière (5 ou 6) lorsqu'il y a un fonctionnement solitaire d'une unité de génération (5 ou 6) prise parmi ladite pluralité d'unités de génération (5 ou 6).

8. Système de commande selon la revendication 7, dans lequel ledit moyen de commande de fonctionnement prioritaire (70) est prévu à l'intérieur d'un système de commande de fonctionnement à haut rendement pour une centrale hydroélectrique qui est munie d'au moins une unité de génération de petite capacité (7) qui génère une petite capacité d'énergie correspondant à une quantité d'eau qui assure la décharge d'une quantité constante d'eau et d'une pluralité d'unités de génération de grande capacité (5 , 6).

9. Système de commande selon la revendication 8, dans lequel ladite pluralité d'unités de génération de grande capacité (5, 6) comprennent une première unité de génération (5) et une seconde unité de génération (6).

10. Système de commande selon la revendication 9, dans lequel ledit moyen de commande de fonctionnement prioritaire (70) est configuré à partir d'un premier circuit ET (71) sur lequel sont entrés des signaux parallèles de première unité de génération (5) indiquant qu'il y a un fonctionnement parallèle d'une première unité de génération (5), des signaux inversés de signaux parallèles de seconde unité de génération (6) qui indiquent qu'il y a un fonctionnement parallèle d'une seconde unité de génération (6) et sur lequel sont émis en sortie des signaux de fonctionnement solitaire de première unité de génération (5) lorsque seulement une première unité de génération (5) fonctionne ; un second circuit ET (72) sur lequel sont entrés des signaux parallèles de seconde unité de génération (6) indiquant qu'il y a un fonctionnement parallèle d'une seconde unité de génération (6), des signaux inversés de signaux parallèles de première unité de génération (5) qui indiquent qu'il y a un fonctionnement parallèle d'une première unité de génération (5) et sur lequel sont émis en sortie des signaux de fonctionnement solitaire de seconde unité de génération (6) lorsque seulement une seconde unité de génération (6) fonctionne ; une minuterie (75) qui compte le temps jusqu'à la sortie d'un signal de commutation selon un cycle constant d'au moins une demi-année ; un premier moyen d'intégration (73) qui, sur la base desdits signaux de commutation provenant de ladite minuterie (75) et desdits signaux de fonctionnement solitaire de première unité de génération (5), réalise une intégration sur le temps pendant lequel ladite première unité de génération (5) a fonctionné de façon solitaire ; et un second moyen d'intégration (74) qui, sur la base desdits signaux de commutation provenant de ladite minuterie (75) et desdits signaux de fonctionnement solitaire de seconde unité de génération, réalise une intégration sur le temps pendant lequel ladite seconde unité de génération a fonctionné de façon solitaire.

11. Système de commande selon la revendication 10, dans lequel lesdits second et premier moyens d'intégration (73, 74) présentent un fonctionnement qui est tel que, même lorsque le temps (75) dudit cycle constant établi par ladite minuterie n'a pas encore été compté, l'entrée de signaux de remise à zéro qui indiquent que le temps de fonctionnement solitaire de cette unité de génération a excédé le temps nécessaire de commutation commute une unité de génération sur l'autre côté, ceci pour obtenir un fonctionnement solitaire.

FIG. 1 PRIOR ART

WATER INTAKE OPENING

CONTROL UNIT 25

START / STOP CONTROL MEANS 25a

WATER LEVEL ADJUSTMENT CONTROL MEANS 25b

GOVERNOR 25c

S17

CONTROL UNIT 26

START / STOP CONTROL MEANS 26a

WATER LEVEL ADJUSTMENT CONTROL MEANS 26b

GOVERNOR 26c

S18

CONTROL UNIT 21

START / STOP CONTROL MEANS 21a

WATER LEVEL ADJUSTMENT CONTROL MEANS 21b

GOVERNOR 21c

S16

GATE OPENING DEGREE GAUGE

TANK WATER LEVEL DETECTION PORTION

WATER LEVEL GAUGE 27

HEAD TANK 4

TIMER 16

TIMER 18

TIMER 17

S1 S2 S3 S4 S5 S6 S7 S8 S9 S10 S11 S12 S13 S14 S15

10 11 12 13 14 15 19 20 22 23 24 28 29

EP 0 435 182 B1

FIG. 2

EP 0 435 182 B1

F I G. 3

EP 0 435 182 B1

F I G. 4

EP 0 435 182 B1

START

INTAKE WATER AMOUNT Qa (S33) IS CALCULATED — ST1

TANK LEVEL IS DETECTED TO OUTPUT SIGNAL S14 — ST2

OPERATION OF SELECTION
PROCESSING MEANS 32

ST3
$Q_1 + Q_2 + Q_3 \leqq Qa$ ? — NO

ST5
$Q_1 + Q_2 \leqq Qa$ ? — NO

ST7
$Q_1(Q_2) + Q_3 \leqq Qa$ ? — NO

ST9
$Q_1(Q_2) \leqq Qa$ ? — NO

ST12
$Q_3 \leqq Qa$ ? — NO

ST4
YES
ALL UNITS 5, 6 AND 7 CAN BE EFFICIENTLY OPERATED

ST6
YES
UNITS 5 & 6 ARE EFFICIENTLY OPERATED. BUT UNIT 7 STOPS

ST8
YES
UNITS 5, 6 & 7 ARE EFFICIENTLY OPERATED

ST10
YES
ANY ONE OF UNITS 5 & 6 IS EFFICIENTLY OPERATED. BUT THE OTHER AND UNIT 7 STOP

ST13
YES
ONLY UNIT 7 IS IFFICIENTLY OPERATED. GENERATORS 5 & 6 STOP

ST11 — UNITS 5 & 6 ARE OPERATED BY PRIORITY OPERATION CONTROL

S14 — CONTINUOUS OPERATION IN SELECTED MODE

S15 — OPERATION IS STOPPED

RETURN

FIG. 5

EP 0 435 182 B1

EP 0 435 182 B1

FIG. 6